# EUROPÄISCHE PATENTSCHRIFT

(11) **EP 0 597 347 B1**
(45) Veröffentlichungstag und Bekanntmachung des Hinweises auf die Patenterteilung: **12.06.1996**
(21) Anmeldenummer: 93117672.1
(22) Anmeldetag: 02.11.1993
(51) Int. Cl.: B29C 33/64, C08L 83/06, B29K 83/00

(54) **Trennmittel für Formen zur Herstellung von Formkörpern aus Kunststoffen**
Mold releasing agent for manufacturing of plastic molded products
Agent de démoulage pour la fabrication des objets moulés en matière plastique

(30) Priorität: 13.11.1992 DE 4238290
(43) Veröffentlichungstag der Anmeldung: 18.05.1994
(73) Patentinhaber: Th. Goldschmidt AG, D-45127 Essen (DE)
(72) Erfinder: Lammerting, Helmut, D-58456 Herbede (DE); Seyffert, Heribert, Dr., D-45133 Essen (DE)

(56) Entgegenhaltungen:
- EP-A- 0 285 391
- EP-A- 0 291 213
- GB-A- 1 220 381
- DATABASE WPI Section Ch, Week 9322, Derwent Publications Ltd., London, GB; Class AGM, AN 93-180750 C22 & SU-A-1 740 182 (FILM MATERIALS SYNTH. LEATHER RES. INST.) 15. Juni 1992

## Beschreibung

Die Erfindung betrifft Trennmittel für Formen zur Herstellung von Formkörpern aus Kunststoffen, insbesondere Polyurethanen, auf der Basis von siliciumorganischen Verbindungen und flüchtigen Siloxanen.

Bei der Herstellung von Formkörpern aus Kunststoffen, insbesondere Polyurethanen, ist es üblich, die Formen vor dem Einbringen des Kunststoffes mit einem Trennmittel zu versehen. Die Trennmittel sollen in geringen Mengen wirksam sein, die einwandfreie Entformung des Formkörpers gewährleisten, jedoch nach der Entformung eine weitere Ver- und Bearbeitung, wie etwa eine Lackierung oder Verklebung, nicht negativ beeinflussen.

Als trennaktive Substanzen werden entsprechend dem Stand der Technik Wachse, Paraffine, Silicone, Ester und Salze von Fettsäuren und Fluorkohlenwasserstoffe verwendet.

Zur Erzielung eines gleichmäßigen, dünnen Filmes auf der Formwandung ist es von Vorteil, möglichst niedrigviskose Trennmittelzubereitungen mit hohem Benetzungsvermögen zu verwenden. Dies erfordert in der Regel die Verwendung lösungsmittelhaltiger Zubereitungen, wobei die Lösungsmittel von der meist erwärmten Oberfläche der Formwandung abdunsten und einen dünnen Trennmittelfilm hinterlassen sollen.

Seit etwa 1985 sind Trennmittel für den obengenannten Einsatzzweck im Handel, welche etwa folgende typische Zusammensetzung in Gew.-% aufweisen:
- 8,75: Siliconöl einer Viskosität von 60 000 cP
- 8,75: Siliconharz
- 17,50: Octamethylcyclotetrasiloxan
- 5,00: nichtionischer Emulgator
- 60,00: Wasser.

Siliconöl und Siliconharz bilden dabei die trennaktive Komponente, während das cyclische Siloxan als flüchtiges Lösungsmittel für die trennaktive Komponente dient, welches mittels des Emulgators in Wasser emulgiert vorliegt. Bei der Anwendung verdunstet das cyclische Siloxan zusammen mit dem Wasser. Auf der Formwandung verbleibt ein dünner Trennmittelfilm.

Die DE-PS 38 21 908 betrifft ebenfalls Trennmittel der vorgenannten Art. Dabei wird zum Stand der Technik ausgeführt, daß lösungsmittelhaltige Zubereitungen die Umwelt belasten, Trennmittel auf Wasserbasis aber die gestellten Anforderungen nicht erfüllen würden. Statt dessen sollen entsprechend der DE-PS 38 21 908 als Trägersubstanz des Trennmittels Polysiloxanverbindungen eingesetzt werden. Eine nachvollziehbare Lehre wird in Anbetracht der unendlichen Vielzahl von Polysiloxanen hierdurch nicht gegeben. Der weitere Hinweis auf bevorzugt zu verwendende flüchtige Siloxane führt den Fachmann ebenfalls nicht zu einer neuen Erkenntnis, da bei im Handel befindlichen Trennmitteln des Standes der Technik cyclische Siloxane als Träger der trennaktiven Substanzen neben Wasser bereits bekannt waren. Konkretisiert wird die Lehre der DE-PS 38 21 908 erst in Unteransprüchen, wobei die Trennmittel folgende Zusammensetzung (in Gew.-Teilen) haben sollen:

### Variante 1:

- 60 bis 70: Polydimethyl-Tetracyclosiloxan
- 20 bis 30: Polydimethyl-Pentacyclosiloxan
- 5 bis 10: Siliconharz
- 5 bis 10: Siliconöl

### Variante 2:

- 90: Polydimethyl-Tetracyclosiloxan
- 10: Siliconöl/Siliconharz

### Variante 3:

- 0,6: Amidwachs
- 0,5: metallseifenhaltige Wachse
- 2,1: Polydimethyl-Pentacyclosiloxan
wobei diese Mischung bei 145° C geschmolzen wird und 12,5 Teile dispergiert werden in einem Gemisch aus
- 8,5: Siliconharz
- 75: Polydimethyl-Tetracyclosiloxan.

Gegenüber dieser konkreten Lehre ist der Gegenstand der vorliegenden Erfindung zu beurteilen. Dieser besteht in der überraschenden Erkenntnis, daß besonders gute Trennmittel erhalten werden, wenn man nicht cyclische Siloxane, sondern bestimmte destillativ erhaltene Schnitte von linearen Polysiloxanen mit ausgewählten trennaktiven siliciumorganischen Verbindungen kombiniert und in organischen Lösungsmitteln gelöst anwendet.

Gegenstand der vorliegenden Erfindung ist deshalb ein Trennmittel, welches dadurch gekennzeichnet ist, daß es aus
- 0,1 bis 5 Gew.-%: eines γ-Aminopropylgruppen enthaltenden Polysiloxans, wobei die γ-Aminopropylgruppen am Stickstoffatom substituiert sein können,
- 4,0 bis 60 Gew.-%: eines Polysiloxans der Formel 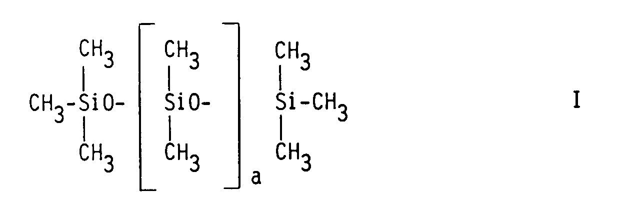 wobei a eine Zahl von 2 bis 6 ist, und das Polysiloxan frei von Verbindungen ist, bei denen a < 2 ist und höchstens 2 Gew.-% an Verbindungen enthält, bei denen a > 6 ist, und
- 35,0 bis 95,9 Gew.-%: eines flüchtigen Lösungsmittels oder Lösungsmittelgemisches besteht.

Es sind außerdem solche Trennmittel bevorzugt, welche 0,2 bis 2,0 Gew.-% Polysiloxane mit γ-Aminopropylgruppen enthalten. Beispiele für substituierte γ-Aminopropylgruppen sind 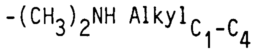
oder -(CH₃)₂NH-(CH₂)₂-NH₂.

Als γ-Aminopropylgruppen enthaltendes Polysiloxan wird vorzugsweise ein Polysiloxan der allgemeinen Formel 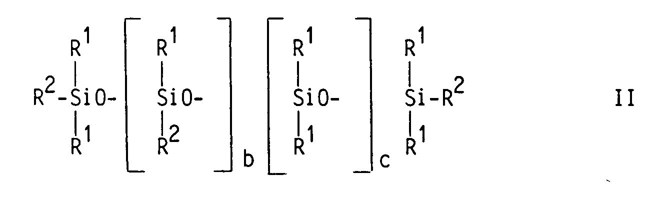
verwendet, wobei
- R¹: ein Alkylrest mit 1 bis 12 Kohlenstoffatomen ist, jedoch mindestens 50 % der Reste R¹ Methylreste sind,
- R²: (1) die Bedeutung des Restes R¹ hat oder
(2) ein γ-Aminopropylrest ist,
mit der Maßgabe, daß mindestens ein Rest R² die Bedeutung (2) hat,
- b: eine Zahl von 0 bis 12 und
- c: eine zahl von 20 bis 400 ist.

Vorzugsweise ist der Index b eine Zahl von 1 bis 4 und der Index c eine Zahl von 50 bis 150.

Das Polysiloxan der Formel 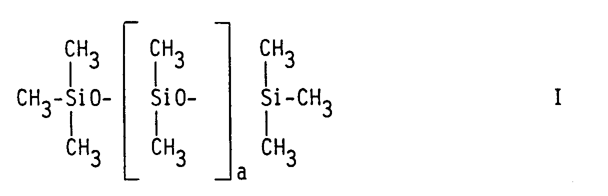
ist durch das wesentliche Merkmal gekennzeichnet, daß es im Gemisch frei von Siloxanen ist, deren Wert von a < 2 ist und maximal 2 Gew.-% Siloxane enthält, deren a-Wert > 6 ist. Verbindungen, bei denen der Wert von a < 2 ist, sind zwar nicht störend, erbringen jedoch keine Wirkung. Verbindungen, bei denen der Wert von a > 6 ist, sind zwar trennaktiv, verdunsten aber nicht von der Oberfläche des Formlings.

Vorzugsweise ist bei den erfindungsgemäß zu verwendenden Polysiloxanen der Index a eine Zahl von 3 bis 5.

Derartige Siloxane lassen sich aus Gemischen durch Destillation abtrennen. Im Gegensatz zu üblichen Siloxanen des Standes der Technik handelt es sich also nicht um äquilibrierte Gemische statistischer Zusammensetzung, sondern um "Schnitte" definierter Kettenlänge. Dabei hat sich überraschenderweise herausgestellt, daß derartig ausgewählte Siloxane nicht nur als flüchtige Lösungsmittel fungieren, sondern darüber hinaus selbst trennaktive Eigenschaften aufweisen und sich insbesondere darin von cyclischen Siloxanen, wie Octamethylcyclotetrasiloxan und Decamethylcyclopentasiloxan, unterscheiden. Erst hierdurch wird es möglich, den Gehalt an γ-Aminopropylsiloxan im Trennmittel niedrig zu halten.

Von Bedeutung ist auch der Gehalt an Lösungsmitteln. Durch die Verwendung der Trennmittel in gelöster Form können dünne, gleichmäßige Schichten auf den Formwänden erzielt werden. Besonders bevorzugt ist dabei als Lösungsmittel eine aliphatische Kohlenwasserstofffraktion eines Siedebereiches zwischen 80 und 180°C. Insbesondere bevorzugt ist es, ein Lösungsmittelgemisch, bestehend aus einer Kohlenwasserstofffraktion eines Siedebereiches zwischen 80 und 180°C und einem niedrigsiedenen Fluorkohlenwasserstoff und/oder Chlorkohlenwasserstoff geringer Ozonschädlichkeit, zu verwenden.

Bei der Verwendung des erfindungsgemäßen Trennmittels wird dieses zunächst auf die Formwandung mit üblichen Sprühgeräten, meist unter Verwendung eines Trägergases, wie Luft oder Inertgas, aufgesprüht. Die Formen sind in der Regel von der vorhergegangenen Nutzung noch warm, so daß das Lösungsmittel rasch abdunstet. Auf der Wandung der Form befindet sich nun das γ-Aminopropylsiloxan zusammen mit dem Siloxanschnitt in dünner Schicht. Die Formteile werden zur kompletten Form zusammengefügt. Der Thermoplast oder der reaktiv härtende Kunststoff wird in die Form gefüllt. Der Formling wird nach Verfestigung und/oder Abkühlung der Form entnommen. Nach der Entformung dunstet das erfindungsgemäß ausgewählte Siloxan im Lauf von einigen Stunden, meist innerhalb von 24 Stunden, ab. Auf dem Formkörper verbleibt nur der äußerst geringe Anteil an γ-Aminopropylsiloxan. Da das ausgewählte Siloxan selbst trennaktiv ist, kann der Gehalt des Trennmittels an γ-Aminopropylsiloxan sehr niedrig gehalten werden. Dieser auf den Formlingen verbleibende geringe Anteil γ-Aminopropylsiloxan stört bei der Weiterverarbeitung nicht. Dies war überraschend, da befürchtet werden mußte, daß beim Hantieren der Formteile Trennmittelrückstände abgegriffen werden. Eine spätere Verklebung der Formlinge oder eine Weiterverarbeitung der Formlinge durch Aufspritzen oder Aufformen zusätzlichen Kunststoffes (z.B. bei der Herstellung von Schuhen mit Mehrfachsohlen) wird nicht behindert.

In den folgenden Beispielen werden die anwendungstechnischen Eigenschaften der erfindungsgemäßen Trennmittel gezeigt und mit denen von Trennmitteln des Standes der Technik gemäß der DE-PS 38 21 908 verglichen.

### Anwendungstechnische Vergleichsversuche

Zur Überprüfung der Trennkräfte, gemessen in kg/dm², wird ein Polyurethanschaum der Dichte 0,9 kg/dm³ hergestellt. Systeme dieser Art werden üblicherweise zur Herstellung von Schuhsohlen (Laufsohlen) eingesetzt. Dazu wird eine Testform aus Aluminium verwendet, die mit einem separaten Deckel mit Schraubzwingen geschlossen werden kann. Die Form wird auf eine Temperatur von 50°C vorgewärmt. Die zu prüfende Trennmittelzubereitung wird mit einer luftzerstäubenden Pistole auf die Innenfläche der Testform und des Deckels gesprüht, so daß ein zusammenhängender Film entsteht.

Das Polyol/Isocyanat-Gemisch wird wie folgt hergestellt:
171 g einer verschäumungsfähigen Polyesterpolyolkomponente werden mit 192 g einer Isocyanatkomponente, basierend auf 4,4-Diisocyanatodiphenylmethan, durch intensives Rühren mit einem Laborrührer mit 2500 U/Min. 7 Sekunden lang vermischt. Das noch flüssig vorliegende Reaktionsgemisch wird in die bereits vorbereitete Aluminiumform gegossen, der Deckel aufgelegt und mit Schraubzwingen verschlossen. Nach einer Standzeit von 4 Minuten wird der Deckel entfernt. Es werden die hierfür notwendigen Zugkräfte mit einer Federwaage gemessen.

Es werden mit jeder Trennmittelzubereitung 10 aufeinanderfolgende Entformungen durchgeführt und aus den ermittelten Trennkräften ein statistischer Mittelwert gebildet. Nach jeweils 10 Entformungen wird die Rückstandsbildung auf der Formenoberfläche beurteilt. Die Formteiloberfläche wird sensorisch geprüft, wobei von Bedeutung ist, daß trockene, möglichst rückstandsfreie Oberflächen vorliegen. Trennmittelrückstände, die allein beim Hantieren auf andere Werkstoffe übertragen werden, können Benetzungsfehler beim Lackieren hervorrufen. Zur Beurteilung der Übertragbarkeit von Trennmittelsubstanzen wird ein Prüfblech mit dem entformten Formkörper in Kontakt gebracht. Dieses gegebenenfalls mit Trennmittelrückständen kontaminierte Blech wird mit einem handelsüblichen Autolack besprüht und das Ausmaß der Benetzungsstörung beurteilt.

Neben diesen Laborüberprüfungen werden einige der nachfolgend aufgeführten Trennmittelzubereitungen auf ihre Verwendbarkeit für ein Anschäumverfahren zur Herstellung zweifarbiger Sohlen überprüft. Bei diesem Verfahren wird zunächst die Laufsohle geschäumt und anschließend in einer zweiten Form die zweite Sohle, die in der Regel eine niedrigere Dichte aufweist, angeschäumt. Die Überprüfung der Trennmittelzubereitungen erfolgt an einem industrieüblichen Desma-Verschäumungsautomaten. Eine Haftungsprüfung wird manuell durch Reißversuche der angeschäumten Sohle durchgeführt.

Es werden folgende Trennmittel untersucht:

### Erfindungsgemäße Trennmittel: (Mengenangaben in Gew.-%)

| Trennmittel | Siloxan I | | Siloxan II Menge | Kohlenwasserstofffraktion | | 1,1-Dichlor-1-fluorethan Menge |
|---|---|---|---|---|---|---|
| | a = | Menge | | Siedebereich | Menge | |
| 1 | 2-6 | 34,2 | 0,8 | 140-160 | 40,0 | 25,0 |
| 2 | 4-5 | 20,2 | 0,8 | 80-110 | 79,0 | - |
| 3 | 3-5 | 5,0 | 0,2 | 80-110 | 94,8 | - |

Bei dem Siloxan der Formel II hat der Index b einen Wert von 2, der Index c einen Wert von 100. Die α,ω-ständigen Reste R² sind Methylreste.

### Nichterfindungsgemäße Trennmittel: (Mengenangaben in Gew.-%)

### Vergleichstrennmittel 4 (Handelsprodukt)

| | |
|---|---|
| Siliconöl 60 000 cP | 8,75 |
| Siliconharz | 8,75 |
| Cyclotetrasiloxan | 17,50 |
| nichtionischer Emulgator | 5,0 |
| Wasser | 60,0 |

Die Vergleichstrennmittel 5 bis 7 werden gemäß DE-PS 38 21 908 - Beispiel 1 - hergestellt. Da dem Beispiel keine konkreten Angaben über die Art des Siliconöles und des Siliconharzes entnommen werden können, werden zwei verschiedene handelsübliche Siliconöle unterschiedlicher Viskosität und drei verschiedene handelsübliche Siliconharze verschiedenen strukturellen Aufbaus eingesetzt.

### Vergleichstrennmittel 5

| | |
|---|---|
| Siliconöl 1000 cP | 6,0 |
| Siliconharz | 6,0 |
| Cyclotetrasiloxan | 65,0 |
| Cyclopentasiloxan | 23,0 |

### Vergleichstrennmittel 6

| | |
|---|---|
| Siliconöl 350 cP | 6,0 |
| Siliconharz, ethoxyfunktionell | 6,0 |
| Cyclotetrasiloxan | 65,0 |
| Cyclopentasiloxan | 23,0 |

### Vergleichstrennmittel 7

| | |
|---|---|
| Siliconöl 350 cP | 6,0 |
| Methyl/Phenylsiliconharz | 6,0 |
| Cyclotetrasiloxan | 65,0 |
| Cyclopentasiloxan | 23,0 |

### Vergleichstrennmittel 8

wird entsprechend DE-PS 38 21 908 - Beispiel 2 - durchgeführt, wobei Angaben über Art des Siliconöles und Siliconharzes fehlen. Es werden deshalb die gleichen Produkte wie in den Trennmitteln 4 bis 6 verwendet.

| | |
|---|---|
| Siliconöl 350 cP | 5,0 |
| Siliconharz | 5,0 |
| Cyclotetrasiloxan | 90,0 |

### Vergleichstrennmittel 9

wird entsprechend DE-PS 38 21 908 - Beispiel 3 - durchgeführt, wobei Angaben über Art des Siliconharzes fehlen. Es wird deshalb das gleiche Siliconharz wie in dem Trennmittel 4 verwendet.

| | |
|---|---|
| Amidwachs | 0,6 |
| Ca/Mg-verseiftes Fischer-Tropsch-Wachs | 0,5 |
| Siliconharz | 8,5 |
| Cyclotetrasiloxan | 75,8 |
| Cyclopentasiloxan | 14,6 |

Bei den anwendungstechnischen Versuchen werden folgende Ergebnisse erhalten:

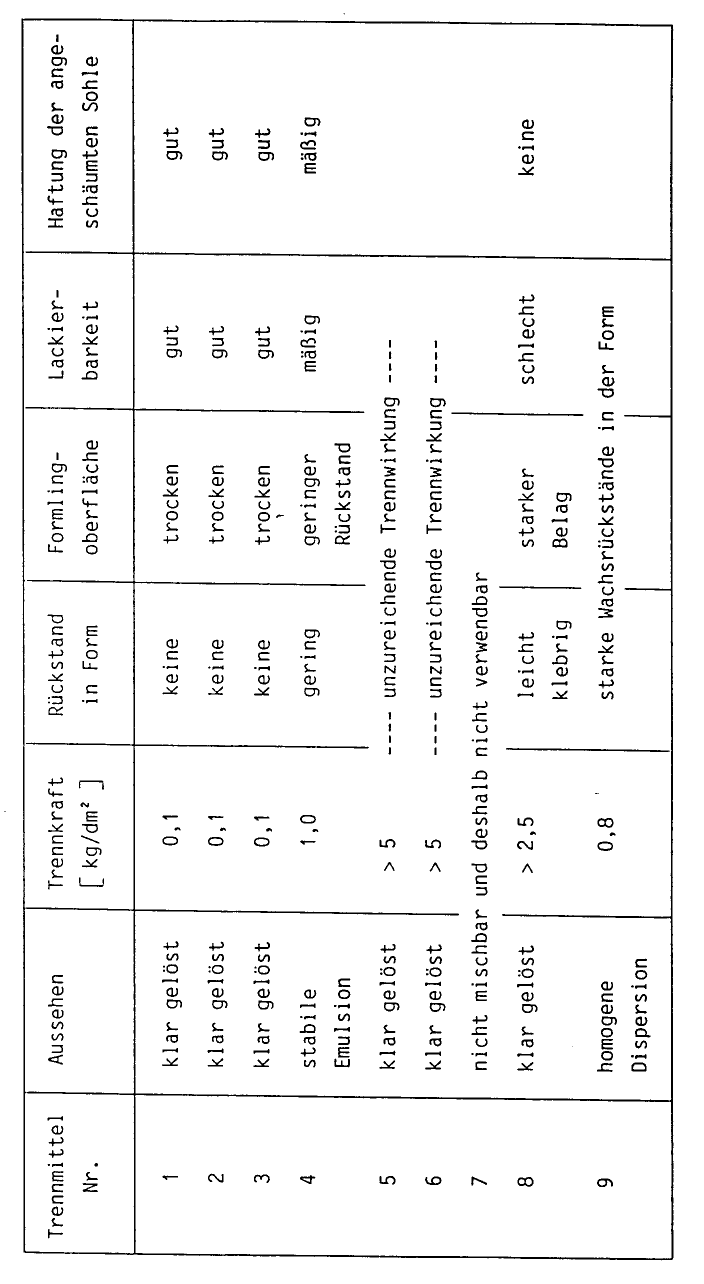

Die Vergleichsversuche zeigen die überlegenen Eigenschaften der erfindungsgemäßen Trennmittel. Mit den Trennmitteln der DE-PS 38 21 908 konnten trotz Variation der verwendeten Siliconöle und Siliconharze keine befriedigenden Ergebnisse erhalten werden. Offenbar sind wesentliche Merkmale dieser Produkte, die für den Erhalt guter Ergebnisse erforderlich sind, in zur Nacharbeitung ausreichender Form nicht offenbart.

## Patentansprüche

1. Trennmittel für Formen zur Herstellung von Formkörpern aus Kunststoffen, insbesondere Polyurethanen, auf der Basis von siliciumorganischen Verbindungen und flüchtigen Siloxanen, dadurch gekennzeichnet, daß es aus
0,1 bis 5 Gew.-% eines γ-Aminopropylgruppen enthaltenden Polysiloxans, wobei die γ-Aminopropylgruppen am Stickstoffatom substituiert sein können,
4,0 bis 60 Gew.-% eines Polysiloxans der Formel 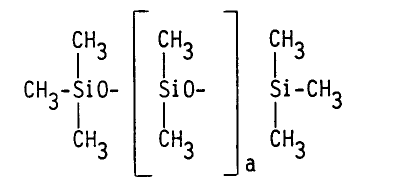 wobei a eine Zahl von 2 bis 6 ist, und das Polysiloxan frei von Verbindungen ist, bei denen a < 2 ist und höchstens 2 Gew.-% an Verbindungen enthält, bei denen a > 6 ist, und
35,0 bis 95,9 Gew.-% eines flüchtigen Lösungsmittels oder Lösungsmittelgemisches besteht.

2. Trennmittel nach Anspruch 1, dadurch gekennzeichnet, daß a eine Zahl von 3 bis 5 ist.

3. Trennmittel nach Anspruch 1 oder 2, dadurch gekennzeichnet, daß es 0,2 bis 2,0 Gew.-% Polysiloxane mit γ-Aminopropylgruppen enthält.

4. Trennmittel nach Anspruch 1, 2 oder 3, dadurch gekennzeichnet, daß es als γ-Aminopropylsiloxan ein Polysiloxan der allgemeinen Formel 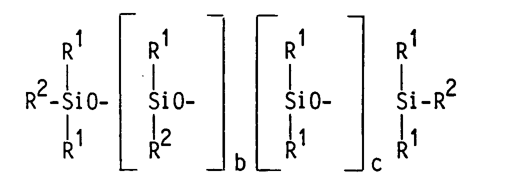 enthält, wobei
R¹ ein Alkylrest mit 1 bis 12 Kohlenstoffatomen ist, jedoch mindestens 50 % der Reste R¹ Methylreste sind,
R²
(1) die Bedeutung des Restes R¹ hat oder
(2) ein γ-Aminopropylrest ist,
mit der Maßgabe, daß mindestens ein Rest R² die Bedeutung (2) hat,
b eine Zahl von 0 bis 12 und
c eine Zahl von 20 bis 400 ist.

5. Trennmittel nach Anspruch 4, dadurch gekennzeichnet, daß der Index b eine Zahl von 1 bis 4 und der Index c eine Zahl von 50 bis 150 ist.

6. Trennmittel nach Anspruch 1, dadurch gekennzeichnet, daß es als Lösungsmittel eine aliphatische Kohlenwasserstofffraktion eines Siedebereiches zwischen 80 und 180°C enthält.

7. Trennmittel nach Anspruch 6, dadurch gekennzeichnet, daß es als Lösungsmittel ein Gemisch, bestehend aus einer Kohlenwasserstofffraktion eines Siedebereiches zwischen 80 und 180°C und einem niedrigsiedenden Fluorkohlenwasserstoff und/oder Chlorkohlenwasserstoff geringer Ozonschädlichkeit, enthält.

## Claims

1. Release agent for moulds for the production of shaped articles of plastics, in particular polyurethanes, which is based on organosilicon compounds and volatile siloxanes, characterized in that it comprises
0.1 to 5 % by weight of a polysiloxane containing γ-aminopropyl groups, it being possible for the γ-aminopropyl groups to be substituted on the nitrogen atom,
4.0 to 60 % by weight of a polysiloxane of the formula 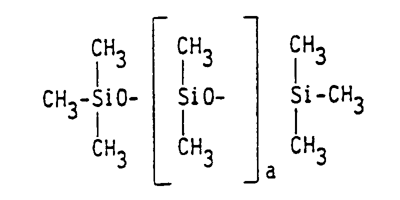 wherein a is a number from 2 to 6, and the polysiloxane is free from compounds in which a is < 2 and comprises not more than 2 % by weight of compounds in which a is > 6, and
35.0 to 95.9 % by weight of a volatile solvent or solvent mixture.

2. Release agent according to Claim 1, characterized in that a is a number from 3 to 5.

3. Release agent according to Claim 1 or 2, characterized in that it comprises 0.2 to 2.0 % by weight of polysiloxanes having γ-aminopropyl groups.

4. Release agent according to Claim 1, 2 or 3, characterized in that it comprises, as the γ-aminopropylsilane, a polysiloxane of the general formula 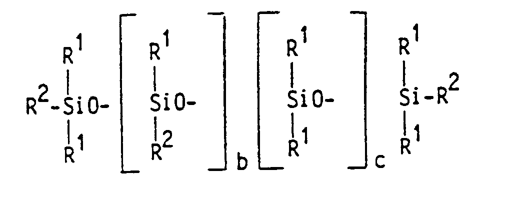 wherein
R¹ is an alkyl radical having 1 to 12 carbon atoms, but at least 50 % of the radicals R¹ are methyl radicals,
R²
(1) has the meaning of the radical R¹ or
(2) is a γ-aminopropyl radical,
with the proviso that at least one radical R² has the meaning (2),
b is a number from 0 to 12 and
c is a number from 20 to 400.

5. Release agent according to Claim 4, characterized in that the index b is a number from 1 to 4 and the index c is a number from 50 to 150.

6. Release agent according to Claim 1, characterized in that it comprises, as a solvent, an aliphatic hydrocarbon fraction having a boiling range between 80 and 180°C.

7. Release agent according to Claim 6, characterized in that it comprises, as a solvent, a mixture comprising a hydrocarbon fraction having a boiling range between 80 and 180°C and a low-boiling fluorohydrocarbon and/or chlorohydrocarbon of low harmfulness to ozone.

## Revendications

1. Agent de démoulage pour la fabrication d'articles moulés en matière plastique, en particulier de polyuréthanes, à base de composés organosiliciés et de siloxanes volatils, caractérisé en ce qu'il est formé de :
0,1 à 5 % en poids d'un polysiloxane contenant des groupes γ-aminopropyle, les groupes γ-aminopropyle pouvant être substitués sur l'atome d'azote,
4,0 à 60 % en poids d'un polysiloxane de formule 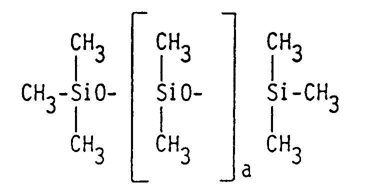 où a un nombre de 2 à 6, le polysiloxane ne contient pas de composés dans lesquels a < 2 et contient au plus 2 % en poids de composés dans lesquels a > 6, et
35,0 à 95,9 % en poids d'un solvant volatil ou d'un mélange de solvants volatils.

2. Agent de démoulage selon la revendication 1, caractérisé en ce que a est un nombre de 3 à 5.

3. Agent de démoulage selon la revendication 1 ou 2, caractérisé en ce qu'il contient 0,2 à 2,0 % en poids de polysiloxanes avec des groupes γ-aminopropyle.

4. Agent de démoulage selon la revendication 1, 2 ou 3, caractérisé en ce qu'il contient, comme γ-aminopropylsiloxane, un polysiloxane répondant à la formule générale 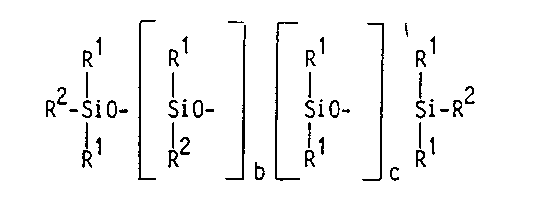 où
R¹ est un reste alkyle ayant de 1 à 12 atomes de carbone, au moins 50 % des restes R¹ étant toutefois des restes méthyle,
R²
(1) a la signification du reste R¹ ou
(2) est un reste γ-aminopropyle,
avec la condition qu'au moins un reste R² ait la signification (2),
b est un nombre de 0 à 12, et
c est un nombre de 20 à 400.

5. Agent de démoulage selon la revendication 4, caractérisé en ce que l'indice b est un nombre de 1 à 4, et l'indice c est un nombre de 50 à 150.

6. Agent de démoulage selon la revendication 1, caractérisé en ce qu'il contient, comme solvant, une fraction d'hydrocarbure aliphatique ayant un point d'ébullition compris entre 80 et 180°C.

7. Agent de démoulage selon la revendication 6, caractérisé en ce qu'il contient, comme solvant, un mélange formé d'une fraction d'hydrocarbure ayant un point d'ébullition compris entre 80 et 180°C et un hydrocarbure fluoré ayant un point bas d'ébullition et/ou un hydrocarbure chloré peu nocif pour l'ozone.
